# EUROPEAN PATENT APPLICATION

(11) **EP 0 624 987 A1**
(43) Date of publication of application: **17.11.1994**
(21) Application number: 94303426.4
(22) Date of filing: 12.05.1994
(51) Int. Cl.: H04N 7/15, H04N 7/18

(54) **Communication system between patient surveillance units**

(30) Priority: 12.05.1993 FI 932141
(71) Applicant: INSTRUMENTARIUM CORPORATION, SF-00510 Helsinki (FI)
(72) Inventor: Rantala, Börje, FIN-00200 Helsinki (FI)
(74) Representative: Charlton, Peter John

(57) **Abstract**

The invention relates to a communication system between patient surveillance units. The selection of a communication between monitors is at the same adapted to establish a vocal link between monitors (1, 6). A microphone (4) and a loudspeaker (5) are located in the vicinity of or in contact with user interface equipment (2, 3; 7, 8) and the vocal message travels in the same closed-circuit network (11) as the rest of monitored information.

## Description

The present invention relates to a communication system between patient surveillance units, comprising at least two surveillance monitors, each monitor having its own information processing electronics, including its operating and control devices which together provide user interface equipment, electrodes or transducers to be attached to a patient and linked with the information processing electronics of at least one monitor, as well as a closed-circuit network for establishing a data transmission link between the monitors.

In surgical or intensive care environment, it is often necessary to visually display the information monitored by a patient surveillance unit on another surveillance unit. This is particularly necessary in teaching hospitals, wherein a more experienced physician (often an anesthesiologist) is responsible not only for his or her own patient but also for a patient of a younger, specializing physician. Another necessity is the post-surveillance of patient already transferred to a recovery room and the consulting of nursing staff as the physician in charge is already in the process of anesthetizing the next patient in the operating theatre.

There are several surveillance units on the market facilitating the visualization of graphic, e.g. ECG, numeric information and trends through a closed-circuit network. In problem situations, a physician in charge must either resort to the use of telephone for consulting advice or go there personally. In each case, this represents a significant break in the surveillance of his or her own patient.

In view of eliminating the above drawback or problem, a system of the invention is characterized in that the selection of a communication between the monitors is at the same time adapted to establish a vocal communication between the monitors. Thus, when operating a surveillance unit to select the (distant) patient whose information is to be inspected, the physician in charge establishes at the same time a vocal communication with a monitor serving as the source of information. The vocal communication can be established by means of the same closed-circuit network used for the transmission of other information. It is preferred that both a microphone and a loudspeaker be located in the immediate vicinity of a display monitor.

An advantage of the invention is the speed of selection and the fact that a physician in charge need not turn his or her eyes away from a monitor screen showing the information for both his or her own patient and a distant patient.

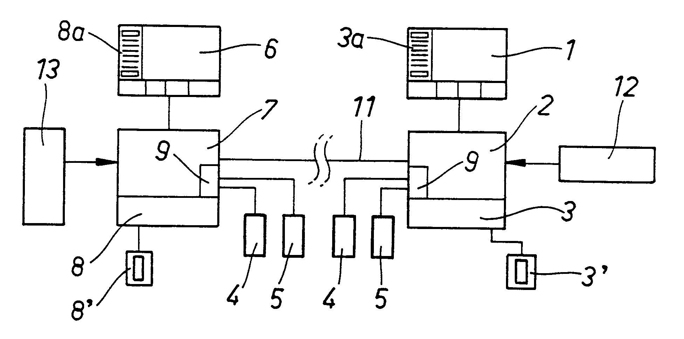

The invention is illustrated in more detail in the accompanying drawing, showing an overall block diagram for a system of the invention. The drawing shows an exemplary embodiment including just two monitors 1, 6 but obviously a plurality of monitors can be linked in a closed-circuit network 11. Each monitor 1, 6 includes its own information processing electronics 2, 7 provided with operating and control equipment 3, 8. Together, these provide user interface equipment. The information processing electronics 2 of each monitor 1, 6 is further provided with electrodes or transducers 12, 13 that can be connected to a patient under surveillance. The electronic information processing units 2, 7 are connected to each other by means of a mains cable 11 for transmitting a monitor image either as a video signal or as a serial or parallel numeric signal.

In the vicinity of the user interface equipment 2, 3; 7, 8 are located a microphone 4 and a loudspeaker 5, for which the information processing electronics is supplemented with necessary interface and amplifier electronics 9 having such a circuitry that the selection of a communication between the monitors 1, 6 at the same time establishes a vocal link between said monitors 1, 6. The audio message travels in the same closed-circuit network cable 11 along with other monitored information. For said selection of a communication link the operating and control equipment 3, 8 includes e.g. a dial 3', 8' (or a mouse) for selecting various connections from a monitor menu 3a, 8a. This link selection also establishes automatically a vocal communication between those monitors displaying the same image information.

The invention is not limited to the above exemplary embodiment. Monitors placed at various locations can be provided with common information processing electronics. Operating and control equipment (press keys, selector switches, control knobs or the like) can be mounted partly or completely in connection with monitors. Especially the device for selecting an image and vocal communication between monitors can be located in physical contact with a monitor. One possible solution is also a control effected from a monitor screen or with a light pen from a physical map.

## Claims

1. A communication system between patient surveillance units, comprising at least two surveillance monitors (1, 6), information processing electronics (2, 7) associated with a monitor, operating and control equipment (3, 8) which, together with the information processing electronics, provides user interface equipment, electrodes or transducers (12, 13) to be attached to a patient and included in the information processing electronics (2) of at least one monitor (1), as well as a closed-circuit network (11) for establishing a data transmission link between the monitors (1, 6), **characterized** in that the selection of a communication between the monitors (1, 6) is adapted at the same time to establish a vocal communication between the monitors.

2. A system as set forth in claim 1, **characterized** in that a microphone (4) or a loudspeaker (5) are located in the vicinity of or in contact with the user interface equipment (2, 3; 7, 8).

3. A system as set forth in claim 1, **characterized** in that the vocal message travels in the same closed-circuit network (11) along with the rest of monitored information.
